# EUROPEAN PATENT APPLICATION

(11) **EP 2 412 557 A1**
(43) Date of publication of application: **01.02.2012**
(21) Application number: 10755742.3
(22) Date of filing: 27.01.2010
(51) Int. Cl.: B60K 35/00, B60R 1/00, B60R 11/02, B60R 11/04, G01C 21/00, G02B 27/02

(54) **VEHICLUAR DISPLAY SYSTEM, METHOD OF DISPLAYING AND VEHICLE**

(30) Priority: 23.03.2009 JP 2009070893
(71) Applicant: Kabushiki Kaisha Toshiba, Minato-ku Tokyo 105-8001 (JP)
(72) Inventor: HOTTA, Aira, Tokyo 105-8001 (JP); SASAKI, Takashi, Tokyo 105-8001 (JP); OKUMURA, Haruhiko, Tokyo 105-8001 (JP); MORIYA, Akihisa, Tokyo 105-8001 (JP)
(74) Representative: HOFFMANN EITLE
(86) International application number: PCT/JP2010/051039
(87) International publication number: WO 2010/109941

(57) **Abstract**

A vehicle mounted display system includes: a forward information acquisition section configured to acquire forward information; a preceding vehicle information acquisition section configured to acquire preceding vehicle information; a position estimation section configured to estimate a position of one eye of a viewer; and a picture projection section configured to generate a light beam including picture information including a display object, and to project the light beam toward the one eye. The picture projection section estimates a view image of the viewer viewing the course ahead of the self-vehicle, and the picture projection section includes a picture data generation section configured to generate the display object. Thus, there are provided a monocular vehicle mounted display system, display method, and vehicle in which a display object indicating the course is perceived at a prescribed position farther than the preceding vehicle.

## Description

### [Technical Field]

This invention relates to a vehicle mounted display system, a display method, and a vehicle.

### [Background Art]

As a vehicle mounted display device, a HUD (head-up display) has been developed. By the HUD, vehicle information, including traveling information such as vehicle speed and navigation information to the destination, is projected on the windshield so that the external information and the vehicle information are made simultaneously viewable.

The HUD can present an intuitive display to the viewing person. It has been proposed to display information such as a route display in accord with the background observed by the driver. For instance, a method for changing the displayed figure in response to the external situation (Patent Document 1) and a method for changing the size of the displayed image in response to the vehicle speed (Patent Document 2) are proposed.

In conventional HUDs including these techniques, the display of the HUD is observed by both eyes. The depth position of the virtual image displayed by the HUD is an optically designed position (optical display position). In many cases, this position is set at 2-3 m ahead of the driver. Hence, in the case of the binocular HUD, when the driver tries to view the display of the HUD simultaneously with viewing the far distance during driving, the display object of the HUD is perceived as a double image and very difficult to see. Conversely, if the driver tries to view the display of the HUD, the displayed image is perceived at 2-3 m ahead due to binocular parallax. Thus, it is difficult to simultaneously perceive the far distance in the background.

Furthermore, the displayed image of the HUD is reflected by e.g. the windshield and observed. Thus, a double image occurs due to the thickness of the reflection screen of the windshield. This also makes the display difficult to see.

To resolve such viewing difficulty due to binocular parallax, a monocular HUD for observing the displayed image with one eye has been proposed. In an example technique, the displayed image is presented only to one eye for the purpose of eliminating binocular parallax and causing the depth position of the object displayed by the HUD to appear farther than the optical display position.
A technique for presenting a displayed image only to one eye in order to prevent the aforementioned double image (Patent Document 3) is proposed.

In such a monocular HUD, in the case where there is a preceding vehicle ahead, the display object overlapping the preceding vehicle is displayed on the near side of the preceding vehicle. Thus, by the masking effect, the display object looks like standing on the near side of the preceding vehicle. Hence, it is difficult to cause the display object to be perceived farther than the preceding vehicle. In particular, in the case of navigation display for route guidance, it is difficult to display the corner located at a position farther than the preceding vehicle.

### [Citation List]

### [Patent Literature]

[Patent Citation 1] JP-A 2006-284458
[Patent Citation 2] JP-A 2006-17626
[Patent Citation 3] JP-A 7-228172 (1995)

### [Summary of Invention]

### [Technical Problem]

The invention provides a monocular vehicle mounted display system, display method, and vehicle in which a display object indicating the course is perceived at a prescribed position farther than the preceding vehicle.

### [Solution to Problem]

According to an aspect of the invention, there is provided a vehicle mounted display system comprising: a forward information acquisition section configured to acquire forward information concerning a course ahead of a self-vehicle; a preceding vehicle information acquisition section configured to acquire preceding vehicle information concerning a preceding vehicle located on the course ahead; a position estimation section configured to estimate a position of one eye of a viewer riding in the self-vehicle; and a picture projection section configured to generate a light beam including picture information including a display object, and to project the light beam toward the one eye of the viewer based on the position of the one eye, based on the forward information and the position of the one eye, the picture projection section estimating a view image of the viewer viewing the course ahead of the self-vehicle, and the picture projection section including a picture data generation section configured to generate the display object extending from a first view image position to a second view image position and including depth information, the first view image position being a position in the view image corresponding to a first position on the self-vehicle side of a position of the preceding vehicle acquired by the preceding vehicle information acquisition section, the second view image position being a position in the view image corresponding to a second position where the self-vehicle is estimated to change the course, the second position being located on opposite side of the position of the preceding vehicle from the first position.

According to another aspect of the invention, there is provided a display method comprising: acquiring forward information concerning a course ahead of a self-vehicle; acquiring preceding vehicle information concerning a preceding vehicle located on the course ahead; estimating a position of one eye of a viewer riding in the self-vehicle; estimating a view image of the viewer viewing the course ahead of the self-vehicle based on the forward information and the position of the one eye; generating the display object extending from a first view image position to a second view image position and including depth information, the first view image position being a position in the view image corresponding to a first position on the self-vehicle side of a position of the preceding vehicle, the second view image position being a position in the view image corresponding to a second position where the self-vehicle is estimated to change the course, the second position being located on opposite side of the position of the preceding vehicle from the first position; generating a light beam including a picture including the display object; and projecting the light beam toward the one eye of the viewer based on the position of the one eye.

According to another aspect of the invention, there is provided a vehicle comprising: the vehicle mounted display system above described; and a windshield configured to cause the light beam emitted from the vehicle mounted display system to be reflected toward the viewer.

### [Advantageous Effects of Invention]

According to the invention, there are provided a monocular vehicle mounted display system, display method, and vehicle in which a display object indicating the course is perceived at a prescribed position farther than the preceding vehicle.

### [Brief Description of Drawings]

[Fig. 1]

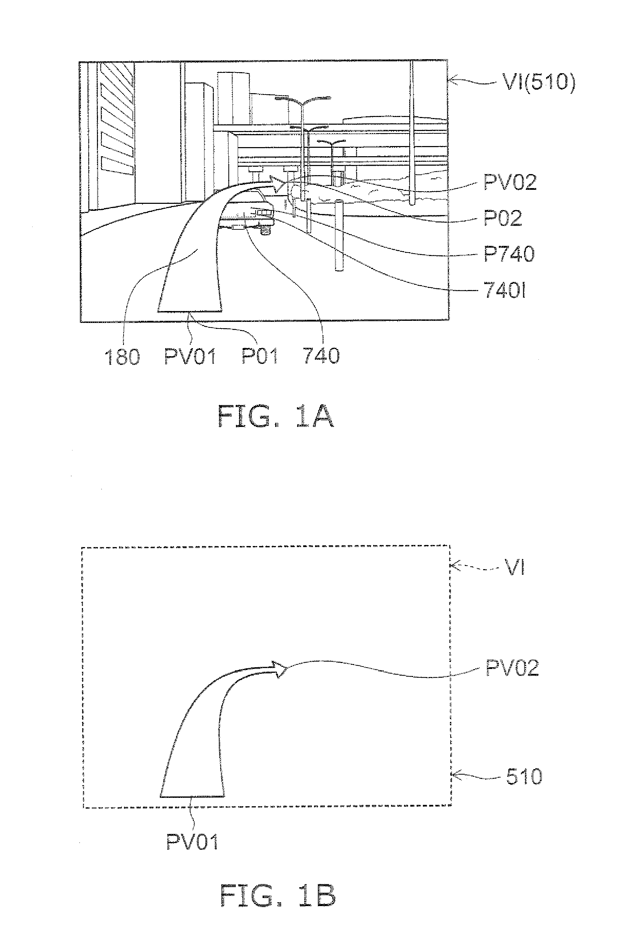

   FIG. 1A and FIG. 1B are schematic views showing the operation of a vehicle mounted display system according to a first embodiment of the invention.
[Fig. 2]

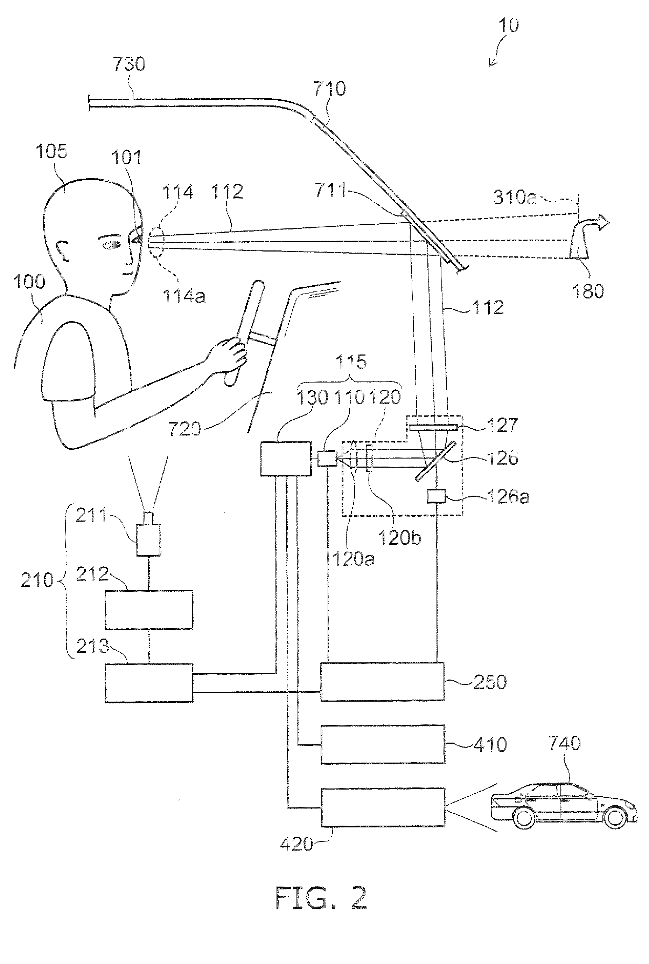

   FIG. 2 is a schematic view showing the configuration of the vehicle mounted display system according to the first embodiment of the invention.
[Fig. 3]

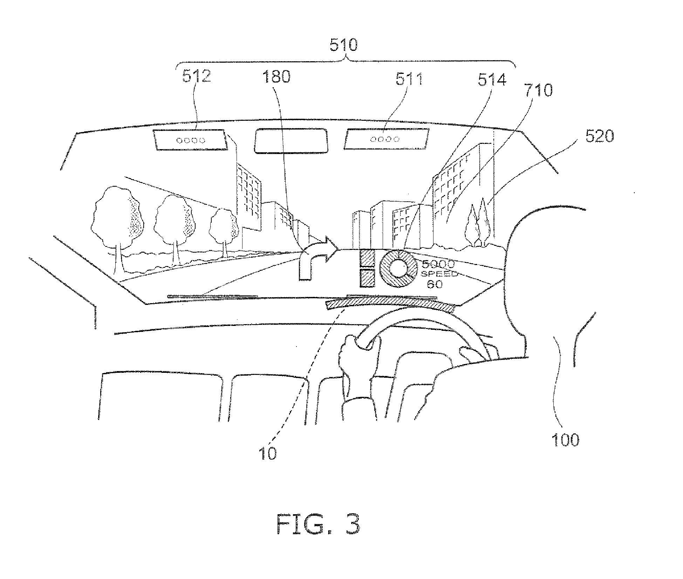

   FIG. 3 is a schematic view showing the operating state of the vehicle mounted display system according to the first embodiment of the invention.
[Fig. 4]

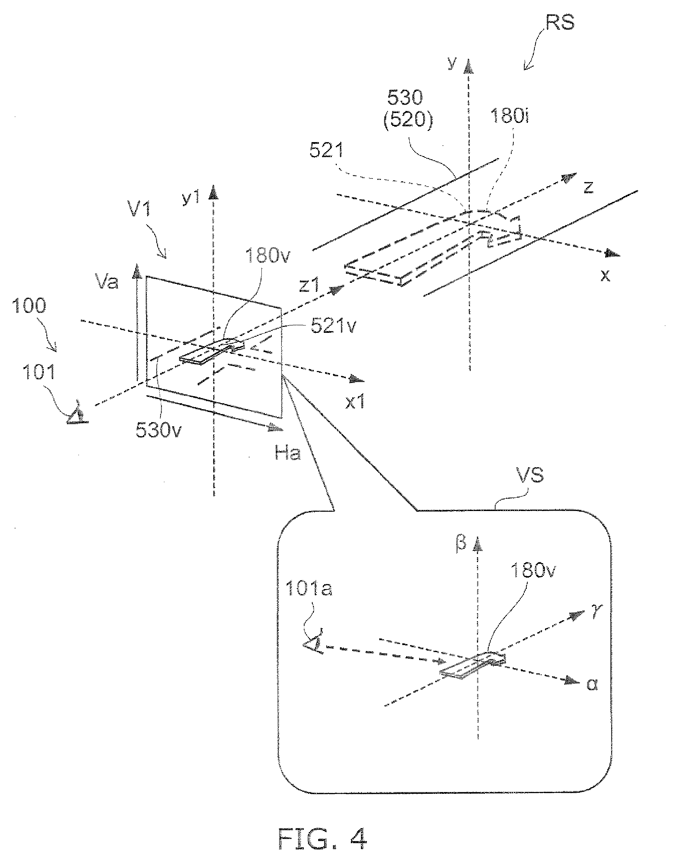

   FIG. 4 is a schematic view showing the operation of the vehicle mounted display system according to the first embodiment of the invention.
[Fig. 5]

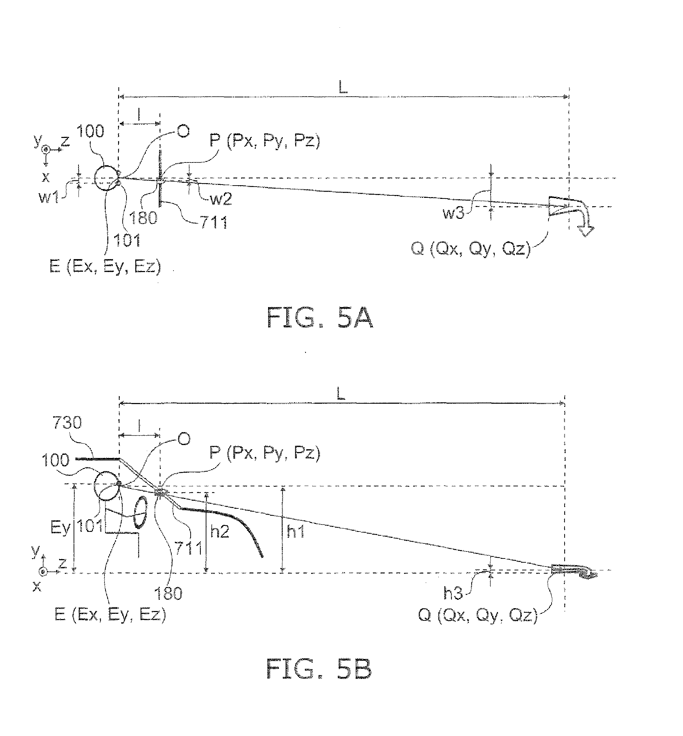

   FIG. 5A and FIG. 5B are schematic views showing the operation of the vehicle mounted display system according to the first embodiment of the invention.
[Fig. 6]

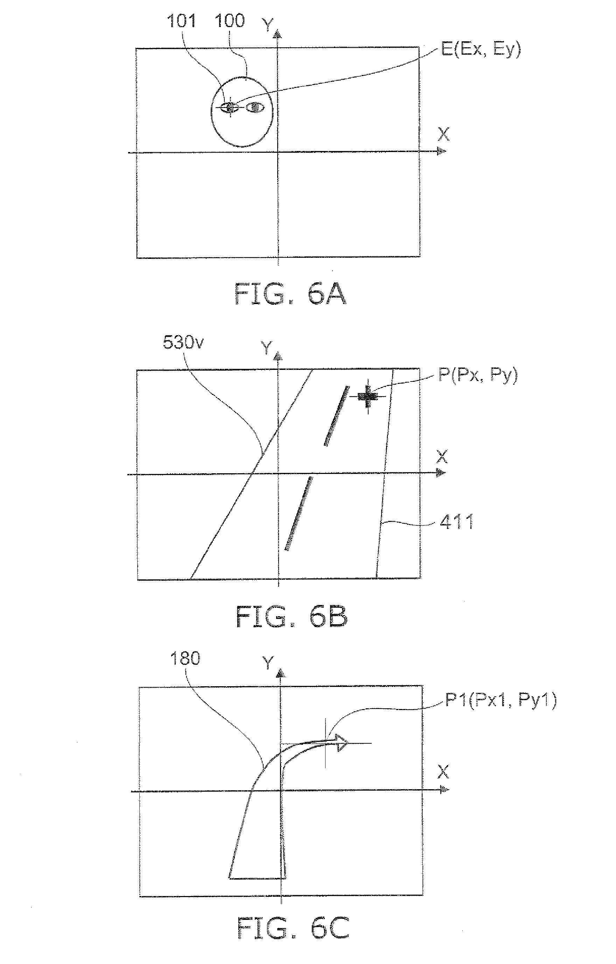

   FIG. 6A, FIG. 6B and FIG. 6C are schematic views showing the operation of the vehicle mounted display system according to the first embodiment of the invention.
[Fig. 7]

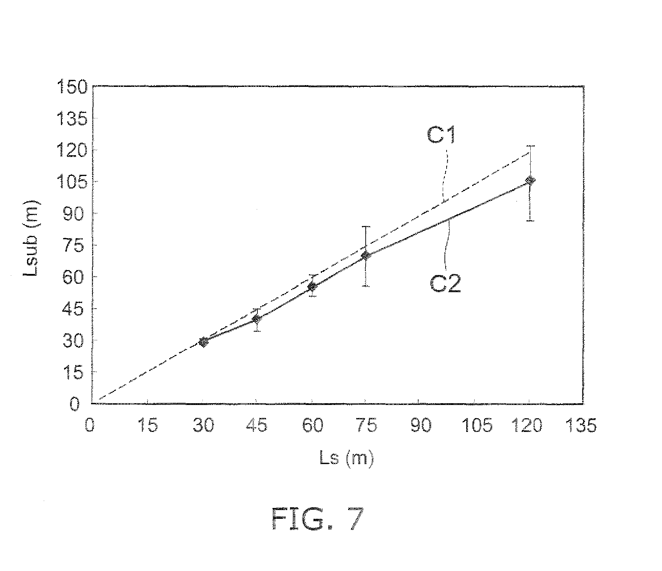

   FIG. 7 is a graph showing the characteristic of the vehicle mounted display system according to the first embodiment of the invention.
[Fig. 8]

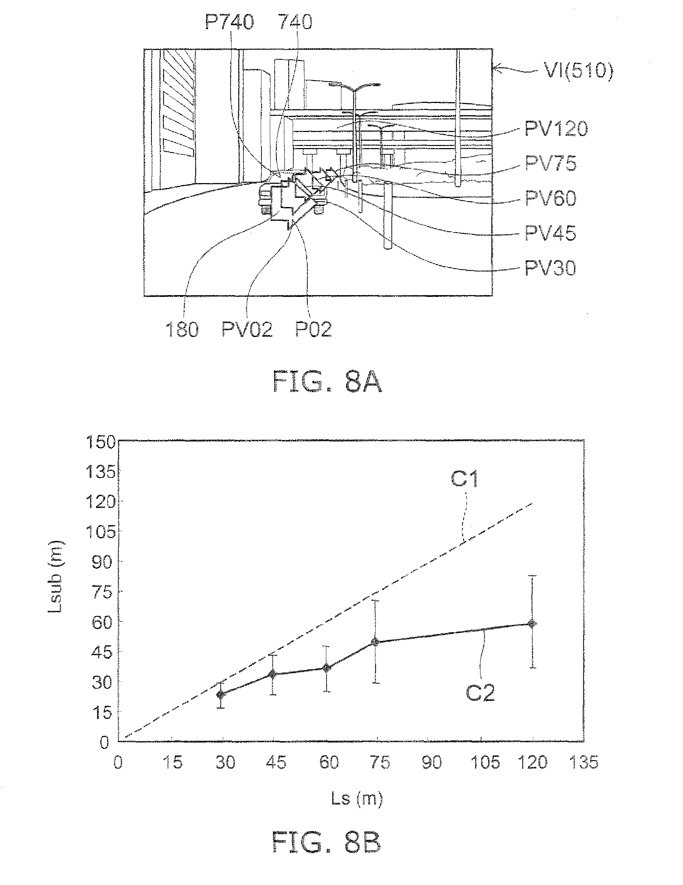

   FIG. 8A and FIG. 8B are schematic views showing the operation and characteristic of a vehicle mounted display system of a first comparative example,
[Fig. 9]

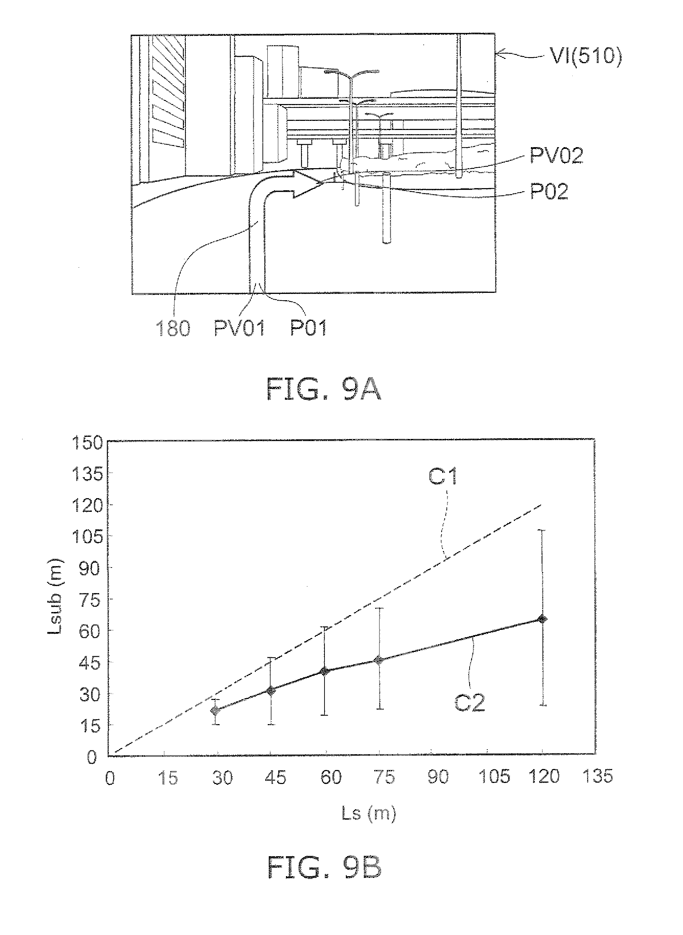

   FIGS. 9A and 9B are schematic views showing the operation and characteristic of a vehicle mounted display system of a second comparative example.
[Fig. 10]

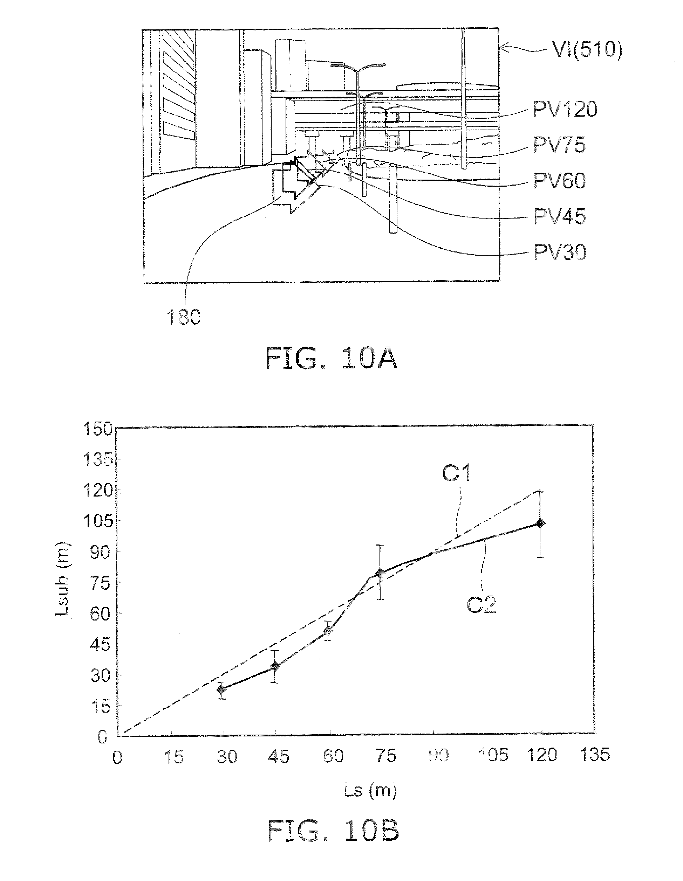

   FIG. 10A and FIG. 10B are schematic views showing an alternative operation and characteristic of the vehicle mounted display system according to the first embodiment of the invention.
[Fig. 11]

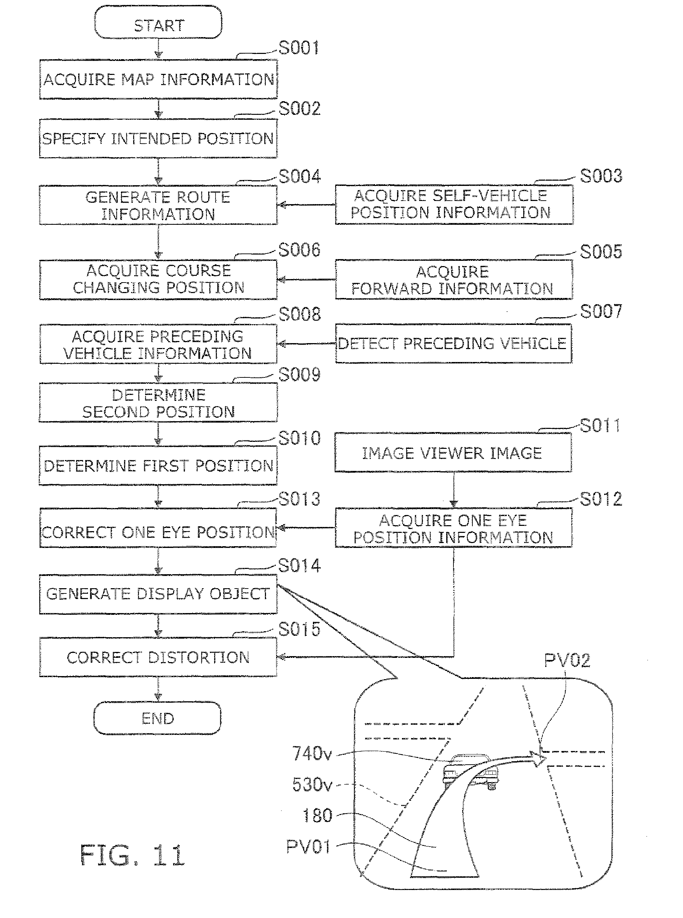

   FIG. 11 is a flow chart showing the operation of the vehicle mounted display system according to the first embodiment of the invention.
[Fig. 12]

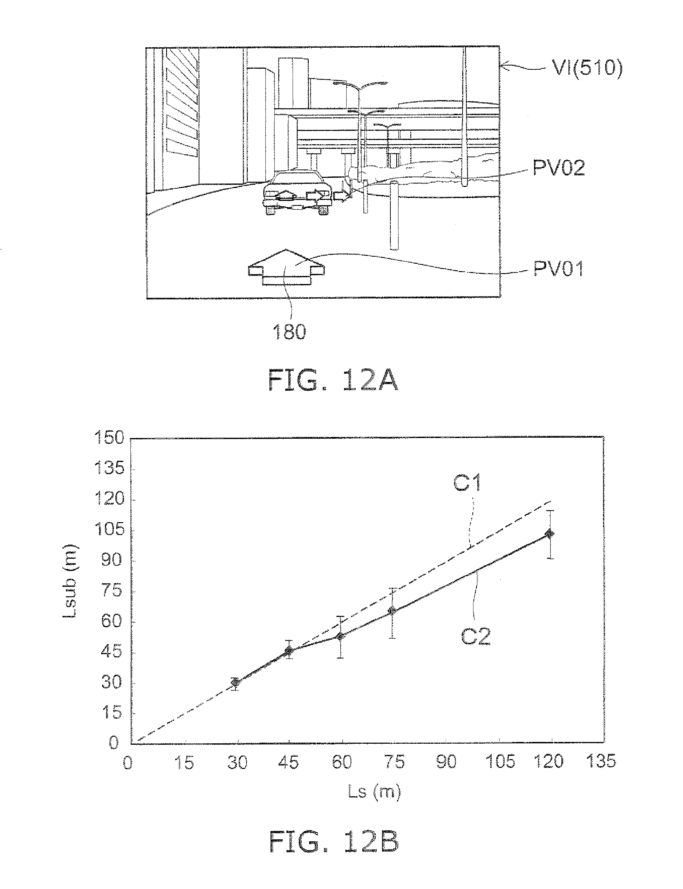

   FIG. 12A and FIG. 12B are schematic views showing an alternative operation and characteristic of the vehicle mounted display system according to the first embodiment of the invention.
[Fig. 13]

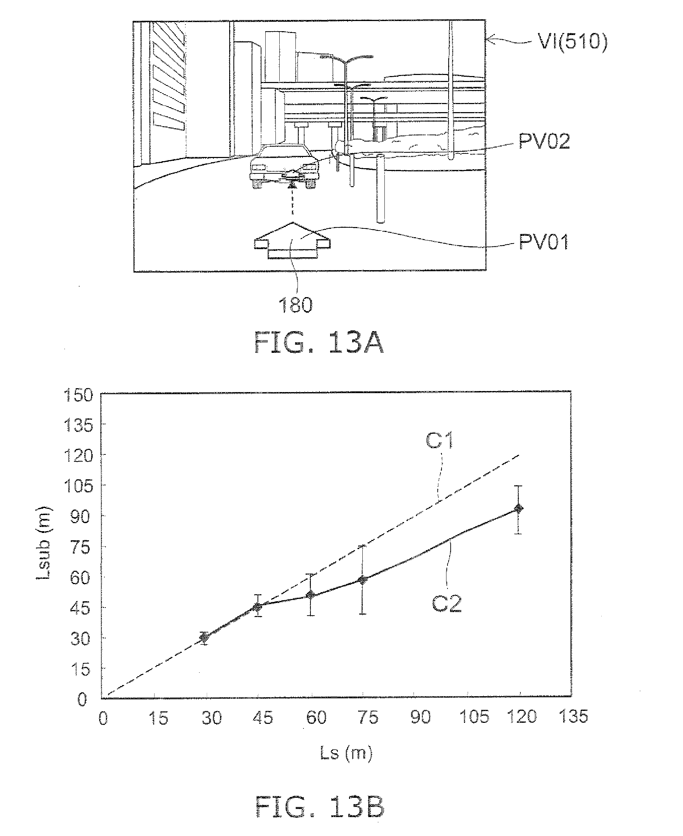

   FIG. 13A and FIG. 13B are schematic views showing an alternative operation and characteristic of the vehicle mounted display system according to the first embodiment of the invention.
[Fig. 14]

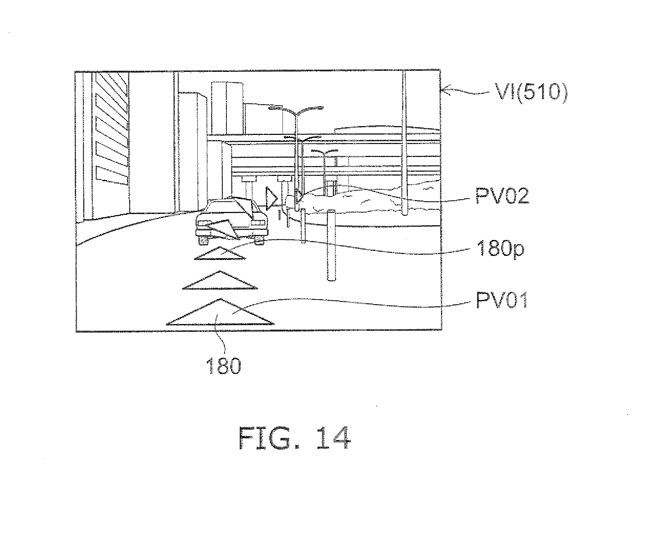

   FIG. 14 is a schematic view showing an alternative operation of the vehicle mounted display system according to the first embodiment of the invention.
[Fig. 15]

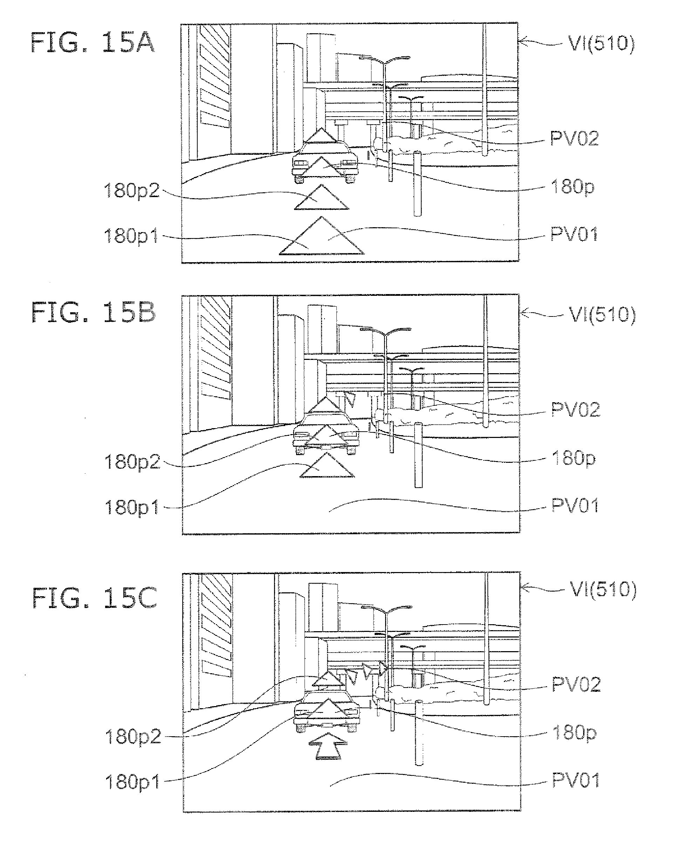

   FIG. 15A, FIG. 15B and FIG. 15C are schematic views showing an alternative operation of the vehicle mounted display system according to the first embodiment of the invention.
[Fig. 16]

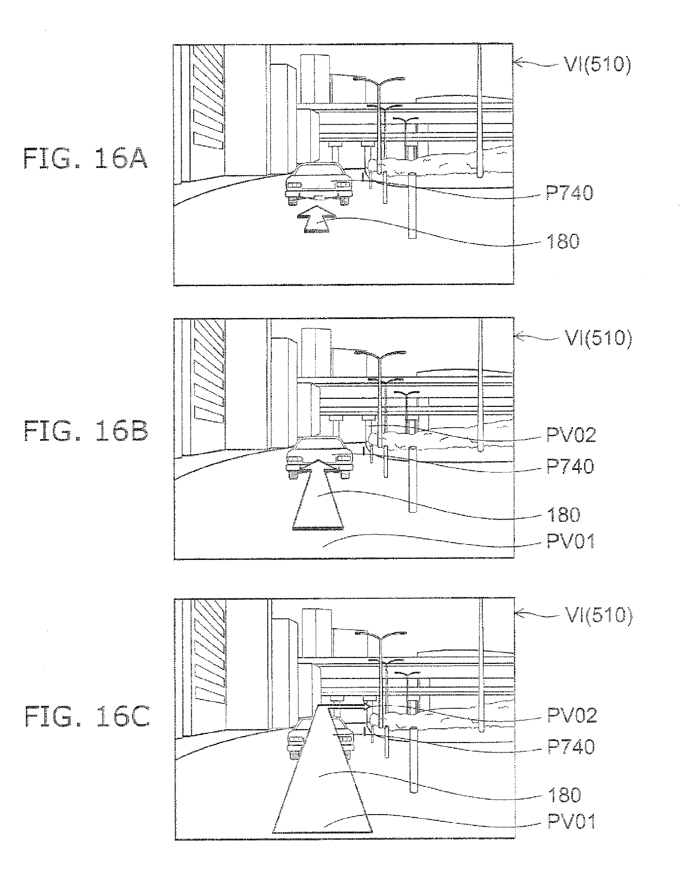

   FIG. 16A, FIG. 16B and FIG. 16C are schematic views showing an alternative operation of the vehicle mounted display system according to the first embodiment of the invention.
[Fig. 17]

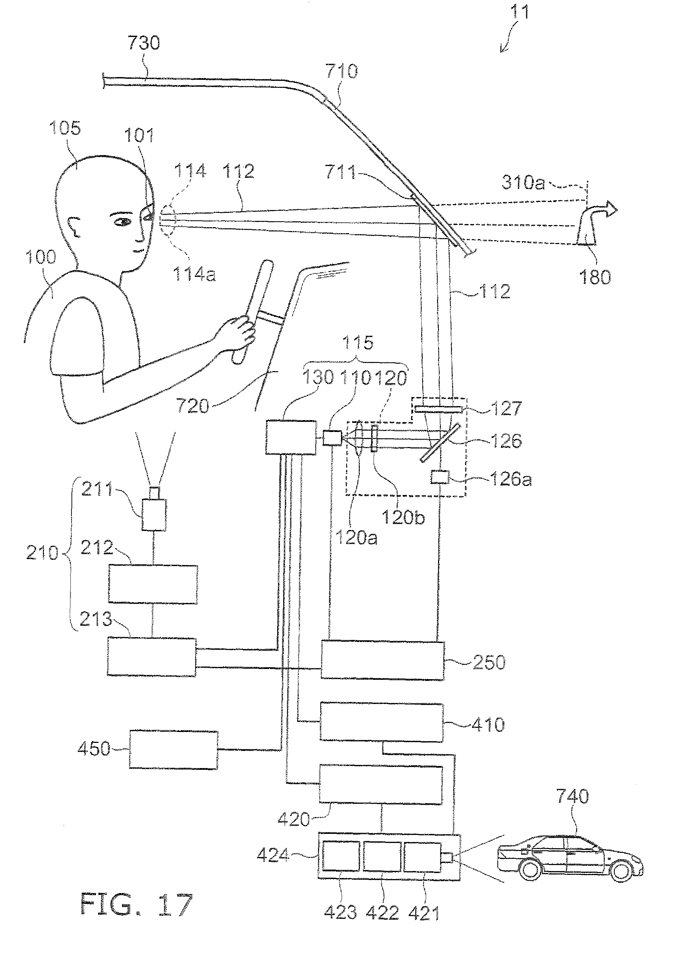

   FIG. 17 is a schematic view showing the configuration of an alternative vehicle mounted display system according to the first embodiment of the invention.
[Fig. 18]

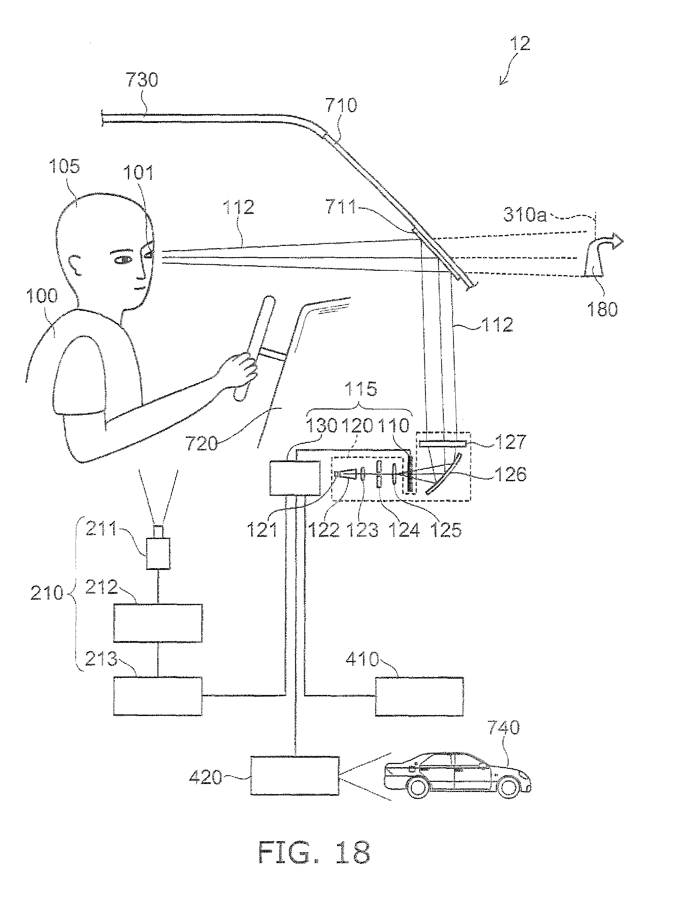

   FIG. 18 is a schematic view showing the configuration of an alternative vehicle mounted display system according to the first embodiment of the invention.
[Fig. 19]

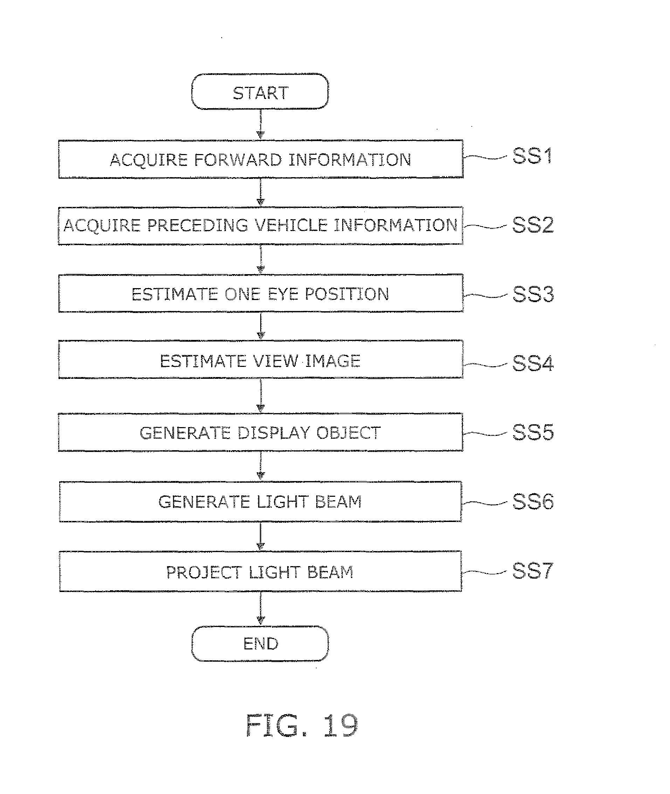

   FIG. 19 is a flow chart showing the display method according to the second embodiment of the invention.

### [Description of Embodiments]

Embodiments of the invention will now be described in detail with reference to the drawings.
In the present specification and the drawings, components similar to those described previously with reference to earlier figures are labeled with like reference numerals, and the detailed description thereof is omitted as appropriate.

### (First embodiment)

FIGS. 1A and 1B are schematic views showing the operation of a vehicle mounted display system according to a first embodiment of the invention.
FIG. 2 is a schematic view showing the configuration of the vehicle mounted display system according to the embodiment.
FIG. 3 is a schematic view showing the operating state of the vehicle mounted display system according to the embodiment.
FIGS. 4 to 6C are schematic views showing the operation of the vehicle mounted display system according to the embodiment.

First, with reference to FIGS. 2 to 6C, the configuration and operation of the vehicle mounted display system according to the embodiment are outlined.
As shown in FIG. 2, the vehicle mounted display system 10 according to the embodiment includes a forward information acquisition section 410, a preceding vehicle information acquisition section 420, a position estimation section 210, and a picture projection section 115.

The forward information acquisition section 410 acquires forward information, which is information concerning the course ahead of the self-vehicle 730. The preceding vehicle information acquisition section 420 acquires preceding vehicle information concerning the preceding vehicle 740 located on the course ahead of the self-vehicle 730. The position estimation section 210 estimates the position of one eye 101 of the viewer 100 riding in the self-vehicle 730. The picture projection section 115 projects a light beam 112 including a picture including a display object 180 toward one eye 101 of the viewer 100 based on the estimated position of one eye 101.

The self-vehicle 730 is a vehicle such as an automobile. The viewer 100 is the driver (operator) driving the automobile. That is, the self-vehicle 730 is a vehicle on which the vehicle mounted display system 10 according to the embodiment is mounted.

The forward information is information concerning the course ahead of the self-vehicle 730. The forward information is information concerning the course ahead with respect to the traveling direction estimated for the self-vehicle 730. The forward information includes e.g. the shape of the road and crossing.

The forward information acquisition section 410 acquires forward information based on e.g. the image ahead of the self-vehicle 730 imaged by a camera. Alternatively, for instance, based on the position of the self-vehicle 730 determined using the GPS (global positioning system) function, the forward information is acquired using various communication functions. Alternatively, for instance, an imaging function or radar function installed on e.g. the road or building can communicate with various databases coupled thereto, and the forward information may be acquired by this communication. Thus, the method for acquiring forward information in the forward information acquisition section 410 is arbitrary.

The preceding vehicle 740 is e.g. a vehicle located on the course ahead of the self-vehicle 730 within a predetermined distance from the self-vehicle 730. For instance, this predetermined distance can be changed with various situations such as the traveling speed of the self-vehicle 730 and the width of the road traveled by the self-vehicle 730.

The preceding vehicle information acquisition section 420 acquires preceding vehicle information concerning this preceding vehicle 740. The preceding vehicle information includes information concerning the presence or absence of the preceding vehicle 740. More specifically, for instance, if the preceding vehicle information representing the presence within a predetermined distance from the self-vehicle 730 is acquired, it is determined that the preceding vehicle 740 is present. Otherwise, it is determined that the preceding vehicle 740 is absent.

The preceding vehicle information acquisition section 420 acquires preceding vehicle information based on e.g. the image of the preceding vehicle 740 imaged by a camera. Alternatively, for instance, the preceding vehicle information is acquired using a vehicle-vehicle communication system and road-vehicle communication system. Alternatively, for instance, the preceding vehicle information is acquired by exchanging the position information of the self-vehicle 730 and the other vehicle through e.g. a satellite communication system. Thus, the method for acquiring preceding vehicle information in the preceding vehicle information acquisition section 420 is arbitrary.

The display object 180 is provided in the picture which the vehicle mounted display system 10 presents to the viewer 100. The display object 180 is a display content including e.g. the arrow indicating the traveling direction. For instance, the display object 180 relates to traveling information of the self-vehicle 730 on which the vehicle mounted display system 10 is mounted. More specifically, the display object 180 is e.g. an arrow indicating the route in a navigation system.

Such a display object 180 is generated based on e.g. the traveling direction expected for the self-vehicle 730. The traveling direction is determined by the route and the position of the self-vehicle 730. The route is determined by a navigation system for generating a route to the destination from map information. The position of the self-vehicle 730 is determined by e.g. GPS. Here, the section for determining the route and the section for determining the position of the self-vehicle 730 described above may be incorporated inside the vehicle mounted display system 10, or incorporated in the self-vehicle 730 on which the vehicle mounted display system 10 is mounted.

As illustrated in FIG. 2, the vehicle mounted display system 10 is provided in e.g. the self-vehicle 730. More specifically, for instance, the vehicle mounted display system 10 is provided behind the dashboard 720 of the self-vehicle 730 as viewed from the viewer 100, who is the driver.

The picture projection section 115 includes e.g. a picture data generation section 130, a picture formation section 110, and a projection section 120.

The picture data generation section 130 generates data concerning a picture including a display object 180. Then, the picture signal including the picture data generated by the picture data generation section 130 is supplied to the picture formation section 110.

The picture formation section 110 forms a picture on e.g. the screen of the picture formation section 110 based on the picture signal supplied from the picture data generation section 130. The picture formation section 110 can be e.g. a liquid crystal display LCD including a light source.

The projection section 120 projects the picture formed by the picture formation section 110 onto one eye 101 of the viewer 100.

The projection section 120 is composed of e.g. a projector lens, a mirror, and various optical elements for controlling the divergence angle (diffusion angle). As the case may be, the projection section 120 includes a light source.
In the example, the projection section 120 is composed of an imaging lens 120a, a lenticular lens 120b for controlling the divergence angle, a mirror 126, and an aspherical Fresnel lens 127.

The light beam 112 emitted from the picture formation section 110 passes through the imaging lens 120a, the lenticular lens 120b, the mirror 126, and the aspherical Fresnel lens 127. The light beam 112 is then reflected by a reflector 711 (translucent reflector) provided on e.g. the windshield 710 (transparent plate) of the self-vehicle 730 on which the vehicle mounted display system 10 is mounted. The light beam 112 is then projected on one eye 101 of the viewer 100. Then, the viewer 100 perceives the virtual image 310 of the display object 180 formed at the virtual image formation position 310a through the reflector 711.

Here, the configuration of the picture projection section 115 is arbitrary. For instance, the configuration of each of the picture data generation section 130, the picture formation section 110, and the projection section 120 described above is also arbitrary. These can be variously modified as described later.

On the other hand, the position estimation section 210 estimates one eye 101 of the viewer 100 on which the picture is projected. The position estimation section 210 can include e.g. an imaging section 211 for imaging the viewer 100, an image processing section 212 for processing the image imaged by the imaging section 211, and a calculation section 213 for determining and estimating the position of one eye 101 of the viewer 100 based on the data image-processed by the image processing section 212.

Here, the imaging section 211 is placed on e.g. the front or lateral side of the driver seat of the self-vehicle 730. For instance, the imaging section 211 images the image of the face of the viewer 100, who is the driver. Thus, as described above, the position of one eye 101 of the viewer is estimated.

Furthermore, in the example, a control section 250 is further provided. The control section 250 controls the picture projection section 115 based on the position of one eye 101 of the viewer 100 estimated by the position estimation section 210. Thus, the control section 250 can adjust at least one of the projection range 114a and the projection position 114 of the light beam 112.

For instance, the control section 250 controls an actuator section 126a coupled to the mirror 126 constituting part of the projection section 120. Thus, by controlling the angle of the mirror 126, the control section 250 controls the projection position 114. Hence, even when the head 105 of the viewer 100 moves, the presentation position of the picture can be controlled following the movement. This eliminates deviation from the picture presentation position due to the movement of the head 105 of the viewer 100. Thus, the practical viewing range can be expanded.

As shown in FIG. 3, in the vehicle mounted display system 10 according to the embodiment, the display object 180 is displayed in a display picture 510 projected on the reflector 711 (not shown) of the windshield 710. Hence, the viewer 100 simultaneously views the external picture 520 and the display picture 510. Thus, the vehicle mounted display system 10 is used as a vehicle mounted HUD.

Here, the position of the display object 180 in the display picture 510 is controlled in accordance with the position of the external picture 520.
Besides such a display object 180, the display picture 510 can include e.g. the current position 511, the surrounding building information 512, and the vehicle information 514 such as speed and fuel, which are controlled independent of the external picture 520.

The HUD can produce a display superimposed on the background (external picture 520). Hence, advantageously, the viewer 100 can intuitively grasp the display. In particular, the monocular HUD enables a viewer to simultaneously view the HUD display even if the point of regard of the viewer 100 is located distantly. Thus, the monocular HUD is suitable for a display superimposed on the external environment.

The picture data generation section 130, for instance, of the picture projection section 115 for generating the display object 180 can have a virtual picture space. This virtual picture space is associated with the real space with reference to the display position of the virtual image where the display object 180 is displayed. The display object 180 is generated so that the coordinate position in the virtual picture space is reflected in the real space.

As shown in FIG. 4, in the vehicle mounted display system 10, the display object 180 is generated at a position in the view image VI of the viewer 100. This position corresponds to the intended position in the real space RS indicated by the display object 180.

That is, based on the forward information acquired by the forward information acquisition section 410 and the position of one eye 101 estimated by the position estimation section 210, the picture projection section 115 estimates the view image VI of the viewer 100 viewing the course ahead of the self-vehicle 730. For instance, the picture projection section 115 estimates how the viewer 100 views the forward information 530 such as the road of the course viewed ahead. In the estimated view image VI, the picture projection section 115 estimates an image 530v corresponding to the forward information 530 such as the road in the real space RS. Here, the image 530v may not be formed as an actual image, but may be a virtual position corresponding to the position of the forward information 530 in the real space RS.

Then, based on the estimated view image VI, the display object 180 is generated so that the display object 180 is placed at a position in the view image VI (position 521v in the view image VI) corresponding to the intended position (target position 521) on the course ahead.
An example of the method for estimating the view image VI and placing the display object 180 described above will be described later.

Then, the picture projection section 115 generates a light beam 112 including a picture including the display object 180. Based on the position of one eye 101 estimated by the position estimation section 210, the picture projection section 115 projects the light beam 112 toward one eye 101 of the viewer 100.

Thus, the viewer 100 views the display object 180 generated in the view image VI as a superimposition on the background image of the course ahead corresponding to the display object 180. Hence, the viewer 100 can view the background image and the display object 180 without sense of strangeness.

Here, the three-dimensional axes (x axis, y axis, and z axis) in the real space on the course ahead can be associated with three-dimensional axes (x1 axis, y1 axis, and z1 axis) defined in the view image VI. Furthermore, three-dimensional axes (α axis, β axis, and γ axis) can be defined in the virtual space VS corresponding to the view image VI.

For instance, the z axis is defined as the traveling direction of the self-vehicle 730. The x-axis direction is the horizontal direction. The y axis is defined as the vertical direction. Then, the x1 axis, y1 axis, and z1 axis are axes in the view image VI corresponding to the x axis, y axis, and z axis, respectively. The α axis, β axis, and γ axis are axes in the virtual space VS corresponding to the x axis, y axis, and z axis, respectively.

Here, it can be assumed that in the three-dimensional space of the view image VI, the distance between the viewer 100 and the view image VI (distance in the z1 direction) is constant. Then, the view image VI can be assumed to include e.g. a two-dimensional space (plane) with a vertical axis Va (corresponding to the y1 axis) and a horizontal axis Ha (corresponding to the x1 axis).

Then, for instance, at a prescribed position in the virtual space VS, a virtual viewpoint 101a is specified. The display object 180 is generated so that the display object 180 includes depth information when the display object 180v in the virtual space VS is viewed from the position of the virtual viewpoint 101a.

That is, the size and shape, for instance, of the display object 180 are controlled so that the display object 180 includes depth information in the virtual space VS corresponding to the depth in the real space RS. The display object 180 includes depth information based on e.g. the law of perspective.

For instance, in the virtual space VS, on the near side to the virtual viewpoint 101a, the display object 180 is controlled to be larger. On the far side, the display object 180 is controlled to be smaller.
Here, the size of the display object 180 superimposed on the view image VI becomes smaller upward (in the increasing direction of the value of y1), and becomes larger downward (in the decreasing direction of the value of y1),

Thus, the viewer 100 viewing the display object 180 can perceive the display object 180 more easily at the depth position in the real space RS where the display object 180 is to be perceived.

Here, as illustrated in FIG. 4, the shape of the display object 180 can be e.g. a curved arrow or a shape having an inflection point at the location of changing the course. The shape includes depth information as described above.

In the following, an example of the method for estimating the view image VI is described.
FIGS. 5A and 5B illustrate a coordinate system in the vehicle mounted display system 10. More specifically, FIG. 5A is a schematic view as viewed from above the head of the viewer 100. FIG. 5B is a schematic view as viewed from the lateral side of the viewer 100.

Here, as shown in FIGS. 5A and 5B, in the (x, y, z) coordinate system, the position of one viewing eye (e.g., dominant eye, such as right eye) 101 of the viewer 100 is referred to as one eye position E(Ex, Ey, Ez).
The position where the light beam 112 including the display object 180 formed by the vehicle mounted display system 10 according to the embodiment is reflected on the reflector 711 of the self-vehicle 730 is referred to as view image position P(Px, Py, Pz), which is a position in the view image VI.

Here, a prescribed reference position O(0, h1, 0) is defined. The origin of the coordinate axes is located in contact with the ground and defined as (0, 0, 0). That is, the reference position O is located at the position of height h1 from the origin of the coordinate axes.

As viewed from the aforementioned prescribed reference position O, an arbitrary position on the course ahead of the self-vehicle 730 is referred to as real space position Q(Qx, Qy, Qz). The real space position Q(Qx, Qy, Qz) is determined based on the forward information acquired by the forward information acquisition section 410.

As viewed from the reference position O, the shift amount in the x-axis direction of the one eye position E is denoted by w1, the shift amount in the x-axis direction of the view image position P is denoted by w2, and the shift amount in the x-axis direction of the real space position Q is denoted by w3.
On the other hand, as viewed from the origin of the coordinate axes, the shift amount in the y-axis direction of the one eye position E is Ey. As viewed from the reference position O, the shift amount in the y-axis direction of the view image position P is h1-h2, and the shift amount in the y-axis direction of the real space position Q is h1-h3.

The distance in the z-axis direction between the reference position O and the view image position P is referred to as distance I. The distance in the z-axis direction between the reference position O and the real space position Q is referred to as distance L.

The real space position Q(Qx, Qy, Qz) includes data concerning the depth information, Qz. However, in the view image VI, such a real space position Q(Qx, Qy, Qz) is estimated as a two-dimensional position in the x1-y1 plane. Hence, the following description refers to the x-axis direction and the y-axis direction corresponding to the x1-axis direction and the y1-axis direction.

As illustrated in FIG. 5A, with regard to the x-axis direction, the ratio between the shift amount w3 from the x axis of the real space position Q and the shift amount w2 from the x axis of the view image position P(Px, Py) is equal to the ratio between the distance L and the distance I. Hence, when one eye 101 of the viewer 100 is located at the reference position O, the value in the x-axis direction of the view image position P(Px, Py), i.e., the shift amount w2, is given by w3xI/L. If one eye 101 of the viewer 100 is displaced from the reference position O, the value can be corrected by the amount of displacement, i.e., the distance Ex (w1).

On the other hand, as illustrated in FIG. 5B, with regard to the y-axis direction, the ratio between the shift amount h1-h3 in the y-axis direction of the real space position Q(Qx, Qy) and the shift amount h1-h2 in the y-axis direction of the view image position P(Px, Py) is equal to the ratio between the distance L and the distance I. Hence, when one eye 101 of the viewer 100 is located at the reference position O, the value in the y-axis direction of the view image position P(Px, Py), i.e., the shift amount h1-h2, is given by (h1-h3)×I/L. If one eye 101 of the viewer 100 is displaced from the reference position O, the value can be corrected by the amount of displacement, i.e., the distance h1-Ey.

Thus, it is possible to estimate the view image position P in the view image VI corresponding to the real space position Q in the real space RS on the course ahead of the self-vehicle 730 as viewed by the viewer 100.

By a method similar to the above method for estimating the view image VI from the real space RS, a display object 180 can be generated at a position in the view image VI corresponding to the intended position in the real space RS indicated by the display object 180.

For instance, consider the case of placing a display object 180 at the view image position P(Px, Py, Pz). Then, the position to place the display object 180 refers to the position of each point included in the display object 180.

As viewed from the aforementioned prescribed reference position O, the position where the virtual image of the display object 180 is perceived in the real space is defined as the aforementioned real space position Q(Qx, Qy, Qz). Here, the distance L is a specified depth distance in specifying the display object 180. That is, the position at the specified depth distance as viewed from the reference position O is the intended depth position.

The ratio of the shift amount w3 to the shift amount w2 is equal to the ratio of the distance L to the distance I. Furthermore, the ratio of the shift amount h1-h3 to the shift amount h1-h2 is equal to the ratio of the distance L to the distance I. Based on these equalities, the display object 180 can be generated at a prescribed position in the view image VI corresponding to the real space RS.

FIG. 6A illustrates the one eye position E(Ex, Ey). More specifically, this figure illustrates an imaged image of the head 105 of the viewer 100 imaged by the imaging section 211. As shown in this figure, this imaged image is processed by the image processing section 212. Then, by the calculation section 213, the position of one eye 101 of the viewer 100 is determined and estimated. Thus, the one eye position E(Ex, Ey), which is the position of one eye 101 as viewed from the reference position O, is estimated by the position estimation section 210. That is, Ex and Ey are calculated by the position estimation section 210.

FIG. 6B illustrates the view image position P(Px, Py), which is the target position in the view image VI where the display object 180 is placed. This figure illustrates an image 530v of the forward information (such as the width and shape of the road) acquired by the forward information acquisition section 410. The view image position P(Px, Py) corresponding to the target position to display the display object 180 is determined. That is, on the road traveled by the self-vehicle 730, the position corresponding to the position to display the display object 180 is determined as the view image position P(Px, Py).

FIG. 6C illustrates the display object position P1(Px1, Py1) of the display object 180 perceived as a superimposition on the view image VI. More specifically, this figure illustrates the display object position P1(Px1, Py1), which is the position of the display object 180 projected on the reflector 711 of the self-vehicle 730 by the vehicle mounted display system 10. This display object position P1(Px1, Py1) is determined based on the aforementioned one eye position E(Ex, Ey) and the view image position P(Px, Py) corresponding to the target position.

Thus, with regard to the forward information 530 such as the road of the course ahead viewed by the viewer 100, an image 530v corresponding to the forward information 530 in the view image VI is estimated. Hence, each position of the display object 180 is generated so as to be placed at a position in the view image VI corresponding to the real space RS.

FIG. 1A schematically illustrates a view image VI and a display object 180 in the picture (display picture 510) included in the light beam 112 and the background of the course ahead of the self-vehicle 730 as viewed by the viewer 100.
FIG. 1B illustrates a display object 180 of the picture (display picture 510) included in the light beam 112.

As shown in FIG. 1A, the view image VI includes information on forward information concerning the road and the like ahead and preceding vehicle information concerning the preceding vehicle 740. The viewer 100 perceives an image of the road and the like and the preceding vehicle 740 at a prescribed position in the view image VI.

As shown in FIGS. 1A and 1B, in the vehicle mounted display system 10 according to the embodiment, the picture projection section 115 generates a display object 180 extending from a first view image position PV01 to a second view image position PV02. The first view image position PV01 is a position in the view image VI corresponding to the first position P01 on the near side of the position of the preceding vehicle 740 (i.e., on the self-vehicle 730 side). The second view image position PV02 is a position in the view image VI corresponding to the second position P02 (course changing position) where the self-vehicle 730 is estimated to change the course.

The first position P01 is a position in the real space RS, located on the near side of the position P740 of the preceding vehicle 740 (on the self-vehicle 730 side of the preceding vehicle 740). For instance, the first position P01 is a position between the self-vehicle 730 and the preceding vehicle 740. For instance, the first position P01 can be located at a prescribed distance on the course ahead of the self-vehicle 730.

The second position P02 is a position such as a branch point (crossing) of the road and the like where the course change is prompted by e.g. a navigation system. As viewed from the self-vehicle 730, the second position P02 is located ahead of the preceding vehicle 740 (on the opposite side of the position of the preceding vehicle 740 from the first position P01).

In the view image VI, the first view image position PV01 and the second view image position PV02 correspond to the first position P01 and the second position P02 in the real space RS, respectively.

The display object 180 extends from the first view image position PV01 to the second view image position PV02. As described above, this display object 180 includes depth information.

Thus, a monocular vehicle mounted display system can be provided in which a display object indicating the course is perceived at a prescribed position farther than the preceding vehicle.

FIG. 7 is a graph showing the characteristic of the vehicle mounted display system according to the first embodiment of the invention.
More specifically, this figure illustrates an experimental result concerning the vehicle mounted display system 10. In this experiment, the preceding vehicle 740 was located at 30 m on the course ahead of the self-vehicle 730. The second position P02 (course changing position) where the self-vehicle 730 is estimated to change the course was varied to 30 m, 45 m, 60 m, 75 m, and 120 m from the self-vehicle. The position of the display object 180 (position of the tip of the arrow) was specified so as to indicate the second position P02. In this situation, the depth position perceived by the viewer 100 was determined.

In FIG. 7, the horizontal axis represents the specified depth distance Ls of the display object 180 (distance between the viewer 100 and the specified depth position). The vertical axis represents the subjective depth distance Lsub perceived by the viewer 100 viewing the display object 180 (distance between the viewer 100 and the perceived subjective depth position).

The dashed line C1 in this figure illustrates the characteristic for the case where the specified depth distance Ls is in agreement with the subjective depth distance Lsub. The solid line C2 represents the subjective depth distance Lsub actually determined by experiment.

As shown in this figure, in the vehicle mounted display system 10 according to the embodiment, the subjective depth distance Lsub is in substantial agreement with the specified depth distance Ls. Furthermore, for instance, in the case where the specified depth distance Ls is set to 120 m, the subjective depth distance Lsub is 105 m. Thus, beyond the distance between the preceding vehicle 740 and the self-vehicle 730, i.e., 30 m, the display object 180 is perceived at a position near the depth specified position ahead of the preceding vehicle 740.

The configuration of the vehicle mounted display system of comparative examples is similar to the vehicle mounted display system 10 according to the embodiment. However, in the case of the comparative examples, the configuration of the display object 180 is different from that of the embodiment.

### (First comparative example)

FIGS. 8A and 8B are schematic views showing the operation and characteristic of a vehicle mounted display system of a first comparative example.
FIG. 8A is a schematic view illustrating the operation, and FIG. 8B is a graph illustrating the characteristic.
As shown in FIG. 8A, in the vehicle mounted display system of the first comparative example, the display object 180 includes a shape placed at the second display position P02. That is, the display object 180 does not extend from the first view image position PV01 corresponding to the first position P01 to the second view image position PV02 corresponding to the second position P02.

In the first comparative example, the display object 180 was placed with the second position P02 varied to 30 m, 45 m, 60 m, 75 m, and 120 m from the self-vehicle 730. Then, the depth position perceived by the viewer 100 was determined by experiment. Also in this case, the preceding vehicle 740 is located at 30 m on the course ahead of the self-vehicle 730.

The display object 180 is generated at the second view image position PV02 corresponding to the second position P02, The display object 180 is placed at positions PV30, PV45, PV60, PV75, and PV120 in the view image VI corresponding to the second positions P02 (positions at 30 m, 45 m, 60 m, 75 m, and 120 m from the self-vehicle 730), respectively. Here, in accordance with the depth position, the size of the display object 180 is varied.

FIG. 8B illustrates the result of this experiment. As shown in FIG. 8B, in the case of the first comparative example, the subjective depth distance Lsub at which the display object 180 is perceived is greatly different from the specified depth distance Ls. Furthermore, for instance, in the case where the specified depth distance Ls is set to 120 m, the subjective depth distance Lsub is approximately 60 m. Thus, the display object 180 is perceived on the near side greatly distant from the specified depth position.

### (Second comparative example)

FIGS. 9A and 9B are schematic views showing the operation and characteristic of a vehicle mounted display system of a second comparative example.
FIG. 9A is a schematic view illustrating the operation, and FIG. 9B is a graph illustrating the characteristic.
As shown in FIG. 9A, in the vehicle mounted display system of the second comparative example, the display object 180 extends from the first view image position PV01 corresponding to the first position P01 to the second view image position PV02 corresponding to the second position P02. However, the display object 180 does not include depth information. That is, the size of the display object 180 (e.g., the width of the arrow) is constant from the first view image position PV01 to the second view image position PV02. It is noted that the preceding vehicle 740 is not shown in this figure.

In the second comparative example, the display object 180 was placed with the second position P02 varied to 30 m, 45 m, 60 m, 75 m, and 120 m from the self-vehicle 730. Then, the depth position perceived by the viewer 100 was determined by experiment. In this case, the experiment was performed in the absence of the preceding vehicle 740 so as to facilitate perceiving the depth position of the display object 180.

FIG. 9B illustrates the result of this experiment. As shown in FIG. 9B, also in the case of the second comparative example, the subjective depth distance Lsub at which the display object 180 is perceived is greatly different from the specified depth distance Ls. Furthermore, for instance, in the case where the specified depth distance Ls is set to 120 m, the subjective depth distance Lsub is approximately 60 m. Thus, the display object 180 is perceived on the near side greatly distant from the specified depth position.

In contrast, as described with reference to FIG. 7, in the vehicle mounted display system 10 according to the embodiment, the subjective depth distance Lsub is in good agreement with the specified depth distance Ls as compared with the first and second comparative example. Thus, the vehicle mounted display system 10 can provide a monocular vehicle mounted display system in which a display object indicating the course is perceived at a prescribed position farther than the preceding vehicle.

In the foregoing, the operation of the vehicle mounted display system 10 has been described in the case where the preceding vehicle 740 is located on the course ahead of the self-vehicle, 730. However, in the vehicle mounted display system 10 according to the embodiment, the operation in the absence of the preceding vehicle 740 is arbitrary.

For instance, also in the case where the preceding vehicle 740 is absent, the display object 180 may be generated in a similar manner to the case where the preceding vehicle 740 is present. More specifically, the first position P01 is specified at a prescribed distance on the course ahead of the self-vehicle 730. The second position P02 is specified at a position such as a branch point (crossing) of the road and the like where the course change is prompted. Using the first view image position PV01 and the second view image position PV02 corresponding to the first position P01 and the second position P02, respectively, the display object 180 may be generated so as to extend from the first view image position PV01 to the second view image position PV02 and to include depth information.

Alternatively, a different display object 180 may be generated. In the following, an alternative example of the operation in the absence of the preceding vehicle 740 is described.
FIGS. 10A and 10B are schematic views showing an alternative operation and characteristic of the vehicle mounted display system according to the first embodiment of the invention.
FIG. 10A is a schematic view illustrating the operation, and FIG. 10B is a graph illustrating the characteristic.
As shown in FIG. 10A, in the vehicle mounted display system 10, in the absence of the preceding vehicle 740, a display object 180 is generated at the second view image position PV02 corresponding to the second position P02 such as a branch point (crossing) of the road and the like where the course change is prompted. More specifically, in the case where the second position P02 is located at 30 m, 45 m, 60 m, 75 m, and 120 m from the self-vehicle 730, the display object 180 is placed at positions PV30, PV45, PV60, PV75, and PV120 in the view image VI corresponding thereto. Here, in accordance with the depth position, the size of the display object 180 is varied.

In such an operation, as shown in FIG. 10B, the subjective depth distance Lsub is in good agreement with the specified depth distance Ls. More specifically, in the absence of the preceding vehicle 740, the display object 180 is not masked by the image of the preceding vehicle 740. Hence, the display object 180 displayed is perceived accurately at the specified depth position where it is placed.

Furthermore, in the absence of the preceding vehicle 740, the display object 180 is displayed at a predetermined depth position. On the near side of the location of changing the course, for instance, the arrow is directed upward. When coming close to the location of changing the course such as a crossing, the direction of the arrow of the display object 180 may be rotated to the direction of changing the course without changing the size and shape of the display object 180.

On the other hand, in the presence of the preceding vehicle, for instance, on the near side of the location of changing the course, the shape of the arrow of the display object 180 is gradually changed. The tip of the arrow of the display object 180 is placed ahead of the preceding vehicle 740 to indicate the direction of changing the course.

Thus, in the vehicle mounted display system 10, the display object 180 can be different between in the case of detecting and not detecting the preceding vehicle 740. Depending on the presence or absence of the preceding vehicle 740, the display mode of the display object 180 can be changed. This facilitates recognizing the difference between the preceding vehicle 740 and the display object 180. Thus, the position of changing the course such as a crossing can be perceived more clearly.

FIG. 11 is a flow chart showing the operation of the vehicle mounted display system according to the first embodiment of the invention.
As shown in FIG. 11, first, map information is acquired (step S001). Then, an intended position is specified (step S002). Then, self-vehicle position information representing the position of the self-vehicle 730 is acquired by e.g. GPS (step S003). Then, based on the foregoing, route information representing a route estimated to be traveled by the self-vehicle 730 is generated (step S004).

Here, the above step S003 may be performed inside the vehicle mounted display system 10, or may be performed by e.g. a GPS or radar system provided outside the vehicle mounted display system 10. The above steps S001, S002, and S004 may also be performed inside the vehicle mounted display system 10, or may be performed by a navigation system provided outside the vehicle mounted display system.

Then, forward information of the course ahead of the self-vehicle 730 at e.g. each time of traveling is acquired (step S005). That is, for the traveling self-vehicle 730, the forward information changing with the passage of time is obtained. This is performed by the forward information acquisition section 410.

Then, based on the acquired forward information, the position of changing the course is acquired (step S006). That is, for the traveling self-vehicle 730, a branch point of changing the course is grasped.

Then, the preceding vehicle 740 is detected (step S007). This is based on e.g. the image of the preceding vehicle 740 imaged by e.g. a camera, and on a inter vehicle communication (IVC) system, road-vehicle communication (RVC) system, and satellite communication system. Then, information concerning the preceding vehicle 740 is obtained, and a determination is made on the presence or absence of the preceding vehicle 740 (step S008). This is performed by the preceding vehicle information acquisition section 420.

Then, based on the presence or absence of the preceding vehicle 740, the second position P02 (position of changing the course) to place the display object 180 is determined (step S009). Then, the first position P01 is determined (step S010). Here, as described above, irrespective of the presence or absence of the preceding vehicle 740, the first position P01 and the second position P02 may be specified likewise.

On the other hand, the image of the viewer 100 is imaged by e.g. a camera (step S011), Based thereon, position information of one eye 101 of the viewer 100 is acquired (step S012). This is performed by the position estimation section 210.

Then, based on the acquired position information of one eye 101, the difference between the reference position 0(0, h1, 0) and the one eye position E(Ex, Ey, Ez) described with reference to FIGS. 5A and 5B is corrected (step S013). Based on the determined first position P01 and second position P02, a display object 180 is generated (step S014). That is, the process described with reference to FIGS. 5A to 6C is performed.

Then, as necessary, distortion of the image due to the picture formation section 110 and various optical components included in the picture projection section 115 is corrected (step S015).

The above operation is performed by the picture data generation section 130, for instance, of the picture projection section 115. Then, a picture signal including the generated display object 180 is provided to the picture formation section 110. Based thereon, a light beam 112 is generated and projected on one eye 101 of the viewer 100.

Thus, a display object indicating the course can be perceived at a prescribed position farther than the preceding vehicle.

The above steps S001-S015 may be interchanged as long as technically feasible, and may be performed simultaneously.

As illustrated in FIGS. 1A and 1B, in the vehicle mounted display system 10, the end of the display object 180 on the second view image position PV02 side is placed outside the region corresponding to the preceding vehicle 740 in the view image VI. That is, the end of the display object 180 on the second view image position PV02 side is placed outside the image 740I of the preceding vehicle 740. This can produce a more accurate perception of the second position P02 (the position such as a branch point of the road and the like where the course change is prompted) corresponding to the second view image position PV02.

Thus, the end of the display object 180 on the second view image position PV02 side is preferably placed at a position which does not overlap the region corresponding to the preceding vehicle 740 in the view image VI.

Furthermore, as illustrated in FIGS. 1A and 1B, in the vehicle mounted display system 10, the display object 180 can include a continuous shape extending from the first view image position PV01 to the second view image position PV02. This produces a clearer perception of the positions extending from the first view image position PV01 through the preceding vehicle 740 to the second view image position PV02 located ahead of the preceding vehicle 740. Thus, the depth position of the second view image position PV02 can be perceived more accurately.

However, the invention is not limited thereto, but the display mode of the display object 180 can be variously modified as described below.

FIGS. 12A and 12B are schematic views showing an alternative operation and characteristic of the vehicle mounted display system according to the first embodiment of the invention.
FIG. 12A is a schematic view illustrating the operation, and FIG. 12B is a graph illustrating the characteristic.
As shown in FIG. 12A, in the alternative operation of the vehicle mounted display system 10, the display object 180 is generated so as to move along a path extending from the first view image position PV01 to the second view image position PV02. Also in this case, the display object 180 includes depth information.
For instance, the size of the display object 180 is smaller on the second view image position PV02 side than on the first view image position PV01 side.

In the example, the end of the display object 180 on the second view image position PV02 side is placed outside the region corresponding to the preceding vehicle 740 in the view image VI.
More specifically, at the second view image position PV02 corresponding to the second position P01 of changing the course, the tip of the arrow of the display object 180 is bent to the direction of changing the course. For instance, at the first view image position PV01, the arrow is directed upward. However, at the second view image position PV02, the arrow is moved horizontally to the position where the arrow tip does not overlap the image of the preceding vehicle 740, and the arrow is directed laterally,

As shown in FIG. 12B, also in this case, the subjective depth distance Lsub is in good agreement with the specified depth distance Ls.

FIGS. 13A and 13B are schematic views showing an alternative operation and characteristic of the vehicle mounted display system according to the first embodiment of the invention.
FIG. 13A is a schematic view illustrating the operation, and FIG. 13B is a graph illustrating the characteristic.
As shown in FIG. 13A, also in this case, the display object 180 is generated so as to move along a path extending from the first view image position PV01 to the second view image position PV02.
However, in the example, the end of the display object 180 on the second view image position PV02 side is placed inside the region corresponding to the preceding vehicle 740 in the view image VI.

As shown in FIG. 13B, also in this case, the subjective depth distance Lsub is in good agreement with the specified depth distance Ls. However, comparing between FIGS. 12B and 13B, the degree of agreement between the subjective depth distance Lsub and the specified depth distance Ls is higher in the characteristic illustrated in FIG. 12B.

Hence, from the results illustrated in FIGS. 12A to 13B, it is found more preferable that the end of the display object 180 on the second view image position PV02 side be placed outside the region corresponding to the preceding vehicle 740 in the view image VI.

Thus, the end of the display object 180 on the second view image position PV02 side is not masked by the image of the preceding vehicle 740. This can produce a more accurate perception of the depth position of the second view image position PV02 of the display object 180.

FIG. 14 is a schematic view showing an alternative operation of the vehicle mounted display system according to the first embodiment of the invention.
As shown in FIG. 14, in the alternative operation of the vehicle mounted display system 10, the display object 180 includes a plurality of display object elements 180p discretely arranged from the first view image position PV01 to the second view image position PV02.
In the example, the plurality of display object elements 180p are displayed simultaneously.

FIGS. 15A to 15C are schematic views showing an alternative operation of the vehicle mounted display system according to the first embodiment of the invention.
More specifically, FIGS. 15A to 15C illustrate the display state of the display object 180 at different times. FIG. 15A corresponds to an initial time. FIG. 15B corresponds to a time later than FIG. 15A. FIG. 15C corresponds to a time later than FIG. 15B.

As shown in FIGS. 15A to 15C, in the vehicle mounted display system 10, the display object 180 includes a plurality of display object elements 180p discretely arranged from the first view image position PV01 to the second view image position PV02. The plurality of display object elements 180p are sequentially displayed, and sequentially disappear.

Thus, in the example, of the plurality of display object elements 180p, a first display object element 180p1 disappears at an earlier time than a second display object element 180p2 placed on the second view image position PV02 side of the first display object element 180p1.
Thus, the display object 180 may be displayed like a ticker.

In the operation illustrated in FIGS. 15A to 15C, the number of the plurality of display object elements 180p can be increased to reduce the difference between the first display object element 180p1 on the first view image position PV01 side and the second display object element 180p2 on the second view image position PV02 side. This operation corresponds to the operation of moving the display object 180 illustrated in FIGS. 12A to 13B.

In addition, the display object 180 can be generated in arbitrary display modes.

FIGS. 16A to 16C are schematic views showing an alternative operation of the vehicle mounted display system according to the first embodiment of the invention.
More specifically, FIG. 16A illustrates a display object 180 in the case where the self-vehicle 730 is traveling without changing the course. FIG. 16B illustrates a display object 180 in the case of changing the course at an initial time. FIG. 16C illustrates a display object 180 at a time later than FIG. 16B.

As shown in FIG. 16A, in the case where the self-vehicle is traveling along the road without changing the course, the display object 180 is displayed at e.g. a depth position on the near side of the preceding vehicle 740.

Then, as shown in FIG. 16B, when changing the course, a first position P01 is specified at a position on the near side of the preceding vehicle 740, and a second position P02 is specified as the position of changing the course. First, from the first view image position PV01 on the road corresponding to the first position P01 toward the second view image position PV02 corresponding to the second position P02, the arrow of the display object 180 extends in the direction from the root of the arrow toward the tip of the arrow.

Subsequently, for instance, as shown in FIG. 16C, the tip of the arrow of the display object 180 is specified at the position of the second view image position PV02 corresponding to the second position P02. In the example, the traveling direction at the crossing of changing the course is indicated by the bend at the tip of the arrow of the display object 180.

The root portion of the arrow of the display object 180 is displayed in a large (thick) size. The tip portion of the arrow is displayed in a small (thin) size. Thus, information concerning the depth is indicated.

In the above operations, at least part of the display object 180 is preferably placed at a position in the view image VI corresponding to a position on the surface of the road of the course ahead. This can produce a more accurate perception of the depth position of the display object 180.

In the vehicle mounted display system 10, the picture formation section 110 can be based on, besides LCD, various optical switches such as DMD (digital micromirror device) and MEMS (microelectromechanical system). Furthermore, the picture formation section 110 can also be based on a laser projector or LED (light emitting diode) projector. In this case, the picture is formed by a laser beam. The picture formation section 110 based on LCD using an LED as a light source can serve for downsizing and power saving of the device.

In the foregoing, a lenticular lens 120b is used as a means for controlling the divergence angle of the light beam 112. Alternatively, for instance, a diffusion plate with a controlled diffusion angle can also be used.

The mirror 126 can be subjected to angle adjustment by the actuator section 126a. Besides a plane mirror, the mirror 126 can be a concave mirror serving as a reflective surface with power. Also in this case, its angle can be changed by the actuator section 126a. Here, the displayed picture may undergo distortion of the image depending on e.g. the angle of the mirror 126. However, by distortion correction in the picture data generation section 130, a distortion-free picture can be presented to the viewer 100.

In the vehicle mounted display system 10, the light beam 112 with a controlled divergence angle reaches the viewer 100. The viewer 100 views the picture with one eye 101. Here, the spacing between the eyes of the viewer 100 is 6 cm on average. Hence, if the width of the light beam 112 on the head 105 of the viewer 100 is controlled to approximately 6 cm, the picture is not projected on both eyes. Here, to facilitate viewing the picture, the picture is preferably projected on the dominant eye of the viewer 100.

In the above example, the control section 250 controls the actuator section 126a coupled to the mirror 126 constituting part of the projection section 120 to control the angle of the mirror 126. However, for instance, by controlling various optical components constituting the projection section 120, the projection range 114a can be controlled. Furthermore, the control section 250 may control the picture formation section 110 to adjust e.g. the brightness and contrast of the picture.

In the above example, based on the estimated position of one eye 101, the control section 250 automatically adjust at least one of the projection range 114a and the projection position 114 of the light beam 112. However, the invention is not limited thereto. For instance, based on the estimated position of one eye 101, at least one of the projection range 114a and the projection position 114 of the light beam 112 may be manually adjusted. In this case, for instance, while viewing on a display the image of the head 105 of the viewer 100 imaged by the projection section 120, the actuator section 126a can be manually controlled to control the angle of the mirror 126.

The picture data generation section 130 generates data concerning a picture including a display object 180 based on the forward information acquired by the forward information acquisition section 410 and the estimated position of one eye 101 of the viewer 100. In the case where the position of one eye 101 is substantially fixed, the display object 180 may be generated based on the forward information acquired by the forward information acquisition section 410. Also in this case, data concerning a picture including a display object 180 is generated based on the forward information and the position of one eye 101.

In the calculation section 213 of the position estimation section 210, for instance, a technique concerning person authentication described in e.g. Japanese Patent No. 3279913 is used to recognize the face of the viewer 100 and to calculate the position of the eye as a face component. Thus, the position of one eye 101 of the viewer 100 on which a picture is to be projected is determined and estimated.

FIG. 17 is a schematic view showing the configuration of an alternative vehicle mounted display system according to the first embodiment of the invention.
As shown in FIG. 17, the alternative vehicle mounted display system 11 according to the embodiment further includes a forward information detection section 424 and a route generation section 450. The rest of the configuration can be made similar to that of the vehicle mounted display system 10, and hence the description thereof is omitted.

The forward information detection section 424 includes e.g. a forward imaging section 421 (camera), an image analysis section 422, and a forward information generation section 423. The image analysis section 422 analyzes the image imaged by the forward imaging section 421. The forward information generation section 423 extracts various pieces of information concerning the shape and obstacles of the road and crossing from the image analyzed by the image analysis section 422 to generate forward information. Thus, as forward information, data concerning the situation of the road ahead (such as the shape of the road and crossing) detected by the forward information detection section 424 is acquired.

The forward information detected by the forward information detection section 424 is supplied to the forward information acquisition section 410.

The forward information detection section 424 can also detect information concerning the preceding vehicle 740 by analyzing the image imaged by the forward imaging section 421. The preceding vehicle information detected by the forward information detection section 424 may be supplied to the preceding vehicle information acquisition section 420.

The forward information detection section 424 may be incorporated in the forward information acquisition section 410 or the preceding vehicle information acquisition section 420.

On the other hand, the route generation section 450 generates route information of a route inferred to be traveled by the self-vehicle 730.

For instance, based on e.g. map information and the current position of the self-vehicle 730, the route generation section 450 calculates a route inferred to be traveled by the self-vehicle 730. Here, for instance, several route candidates may be calculated. The viewer 100, who is the driver of the self-vehicle 730, may be prompted to select one of the candidates. Based on the result of the selection, the route may be determined.

Then, as described with reference to FIG. 11, based on the generated route information, the position of changing the course is determined. Based thereon, a display object 180 is generated.

This route generation section 450 may be incorporated in e.g. the picture data generation section 130. Alternatively, the route generation section 450 may be incorporated in various components incorporated in the vehicle mounted display system.

This route generation section 450 may not be provided in the vehicle mounted display system 11. For instance, a navigation system separately provided in the self-vehicle 730 may include a section corresponding to the route generation section 450. The route inferred to be traveled by the self-vehicle 730 may be generated by the navigation system. The picture data generation section 130 may obtain this route and generate picture data including a display object 180.

Furthermore, the section corresponding to the route generation section 450 may be provided separately from the self-vehicle 730. In this case, by e.g. wireless technology, the picture data generation section 130 can obtain the data from the section corresponding to the route generation section 450 provided separately from the self-vehicle 730 and generate picture data including a display object 180.

Thus, the route generation section 450 (and the section corresponding thereto) can be provided anywhere.

FIG. 18 is a schematic view showing the configuration of an alternative vehicle mounted display system according to the first embodiment of the invention.
As shown in FIG. 18, in the alternative vehicle mounted display system 12 according to the embodiment, the configuration of the picture projection section 115 is different from that of the vehicle mounted display system 10 illustrated in FIG. 2. Specifically, the configuration of the picture formation section 110 and the projection section 120 is different. Furthermore, the example does not include the control section 250. The rest of the configuration is similar to that of the vehicle mounted display system 10, and hence the description thereof is omitted.

Also in the vehicle mounted display system 12 according to the example, the picture formation section 110 can be based on e.g. various optical switches such as LCD, DMD, and MEMS. Alternatively, the picture formation section 110 can also be based on a laser projector or LED projector.

In the example, the projection section 120 includes e.g. a light source 121, a tapered light guide 122, a first lens 123, a variable aperture 124, a second lens 125, a mirror 126 of e.g. the concave movable type, and an aspherical Fresnel lens 127. Here, for instance, the focal distance of the first lens 123 is denoted by f1, and the focal distance of the second lens 125 is denoted by f2. Then, the variable aperture 124 is placed at a distance of f1 from the first lens 123 and at a distance of f2 from the second lens 125.

The light beam emitted from the second lens 125 is injected into the picture formation section 110. Based on the picture formed by the picture formation section 110, the light beam is modulated into a light beam 112.

The light beam 112 passes through the mirror 126 and the aspherical Fresnel lens 127. The light beam 112 is then reflected by the reflector 711 of the windshield 710 of the self-vehicle 730 on which the vehicle mounted display system 12 is mounted. The light beam 112 is then projected on one eye 101 of the viewer 100.

The light source 121 can be one of various light sources such as LED, high pressure mercury lamp, halogen lamp, and laser. The aspherical Fresnel lens 127 can be designed e.g. in accordance with the shape of the windshield 710 so that the shape (such as cross-sectional shape) of the light beam 112 can be controlled.

### (Second embodiment)

In the following, a display method according to a second embodiment of the invention is described.
FIG. 19 is a flow chart showing the display method according to the second embodiment of the invention.
As shown in FIG. 19, in the display method according to the second embodiment of the invention, first, forward information concerning the course ahead of the self-vehicle 730 is acquired (step SS1). Then, preceding vehicle information concerning the preceding vehicle 740 located on the course ahead is acquired (step SS2). Then, the position of one eye 101 of the viewer 100 riding in the self-vehicle 730 is estimated (step SS3).

Then, based on the forward information and the position of one eye 101, the view image VI of the viewer 100 viewing the course ahead of the self-vehicle 730 is estimated (step SS4).

Then, a display object 180 is generated (step SS5). The display object 180 extends from a first view image position PV01 to a second view image position PV02 and includes depth information. The first view image position PV01 is a position in the view image VI corresponding to the first position P01 on the self-vehicle 730 side of the position of the preceding vehicle 740. The second view image position PV02 is a position in the view image VI corresponding to the second position P02 where the self-vehicle 730 is estimated to change the course. The second position P02 is located on the opposite side of the position of the preceding vehicle 740 from the first position P01.

Then, a light beam 112 including a picture including the display object 180 is generated (step SS6). Then, based on the estimated position of one eye 101, the light beam 112 is projected toward one eye 101 of the viewer 100 (step SS7).

Thus, a monocular display method can be provided in which the display object indicating the course is perceived at a prescribed position farther than the preceding vehicle.

The above steps SS1-SS7 may be interchanged as long as technically feasible, and may be performed simultaneously.

### (Third embodiment)

In the following, a vehicle according to a third embodiment of the invention is described.
The vehicle according to the embodiment is the aforementioned self-vehicle 730. More specifically, as illustrated in FIG. 2, the self-vehicle 730 includes one of the vehicle mounted display systems according to the first embodiment, and a windshield 710 causing the light beam 112 emitted from the vehicle mounted display system to be reflected toward the viewer 100.

For instance, as illustrated in FIG. 2, the self-vehicle 730 includes the vehicle mounted display system 10 e.g. behind the dashboard 720 of the self-vehicle 730 as viewed from the viewer 100.

Thus, a vehicle capable of providing a monocular display can be provided in which a display object indicating the course is perceived at a prescribed position farther than the preceding vehicle.

The embodiments of the invention have been described above with reference to examples. However, the invention is not limited to these examples. For instance, various specific configurations of the components constituting the vehicle mounted display system, the display method, and the vehicle are encompassed within the scope of the invention as long as those skilled in the art can similarly practice the invention and achieve similar effects by suitably selecting such configurations from conventionally known ones.
Furthermore, any two or more components of the examples can be combined with each other as long as technically feasible. Such combinations are also encompassed within the scope of the invention as long as they fall within the spirit of the invention.

In addition, those skilled in the art can suitably modify and implement the vehicle mounted display system, the display method, and the vehicle described above in the embodiments of the invention. All the vehicle mounted display systems, display methods, and vehicles thus modified are also encompassed within the scope of the invention as long as they fall within the spirit of the invention.

In addition, those skilled in the art can conceive various modifications and variations within the spirit of the invention. It is understood that such modifications and variations are also encompassed within the scope of the invention.

### [Industrial Applicability]

According to the invention, there are provided a monocular vehicle mounted display system, display method, and vehicle in which a display object indicating the course is perceived at a prescribed position farther than the preceding vehicle.

### [Explanation of Reference]

- 10, 11, 12: vehicle mounted display system
- 100: viewer
- 101: one eye
- 101a: virtual viewpoint
- 105: head
- 110: picture formation section
- 112: light beam
- 114: projection position
- 114a: projection range
- 115: picture projection range
- 120: projection section
- 120a: imaging lens
- 120b: lenticular lens
- 121: light source
- 122: tapered light guide
- 123: first lens
- 124: variable aperture
- 125: second lens
- 126: mirror
- 126a: actuator section
- 127: aspherical Fresnel lens
- 130: picture data generation section
- 180: display object
- 180p: display object element
- 180p1: first display object element
- 180p2: second display object element
- 180v: display object
- 210: position estimation section
- 211: imaging section
- 212: image processing section
- 213: calculation section
- 250: control section
- 310: virtual image
- 310a: virtual image formation position
- 410: forward information acquisition section
- 410a: forward information data storage section
- 420: preceding vehicle information acquisition section
- 421: forward imaging section
- 422: image analysis section
- 423: forward information generation section
- 424: forward information detection section
- 450: route generation section
- 510: display picture
- 511: current position
- 512: building information
- 514: vehicle information
- 520: external picture
- 521: target position
- 521v: position in the view image VI
- 530: forward information
- 530v: image
- 710: windshield
- 711: reflector
- 720: dashboard
- 730: self-vehicle (vehicle)
- 740: preceding vehicle
- 7401: image of preceding vehicle
- O: reference position
- P: view image position
- P01: first position
- P02: second position
- P1: display object position
- P740: position of the preceding vehicle
- PV01: first view image position
- PV02: second view position
- PV30, PV45, PV60, PV75, PV120: position
- Q: real space position
- RS: real space
- VI: view image
- VS: virtual space (picture space)

## Claims

1. A vehicle mounted display system comprising:
a forward information acquisition section configured to acquire forward information concerning a course ahead of a self-vehicle;
a preceding vehicle information acquisition section configured to acquire preceding vehicle information concerning a preceding vehicle located on the course ahead;
a position estimation section configured to estimate a position of one eye of a viewer riding in the self-vehicle; and
a picture projection section configured to generate a light beam including picture information including a display object, and to project the light beam toward the one eye of the viewer based on the position of the one eye,
based on the forward information and the position of the one eye, the picture projection section estimating a view image of the viewer viewing the course ahead of the self-vehicle, and the picture projection section including a picture data generation section configured to generate the display object extending from a first view image position to a second view image position and including depth information, the first view image position being a position in the view image corresponding to a first position on the self-vehicle side of a position of the preceding vehicle acquired by the preceding vehicle information acquisition section, the second view image position being a position in the view image corresponding to a second position where the self-vehicle is estimated to change the course, the second position being located on opposite side of the position of the preceding vehicle from the first position.

2. The system according to claim 1, wherein the display object has a larger size at the first view image position than at the second view image position,

3. The system according to claim 2, wherein an end of the display object on a side of the second view image position is placed at a position not overlapping a region corresponding to the preceding vehicle in the view image.

4. The system according to claim 3, wherein the display object includes a continuous shape extending from the first view image position to the second view image position.

5. The system according to claim 3, wherein the display object includes a plurality of display object elements discretely arranged from the first view image position to the second view image position.

6. The system according to claim 5, wherein of the plurality of display object elements, a first display object element disappears at an earlier time than a second display object element placed on the second view image position side of the first display object element.

7. The system according to claim 3, wherein at least part of the display object moves between the first view image position and the second view image position.

8. The system according to claim 3, wherein at least part of the display object is placed at a position in the view image corresponding to a position of a road of the course ahead.

9. The system according to claim 3, wherein the preceding vehicle information acquisition section acquires information of presence and information of absence of the preceding vehicle on the course ahead, and
the display object is different between in the presence and the absence of the preceding vehicle on the course ahead.

10. A display method comprising:
acquiring forward information concerning a course ahead of a self-vehicle;
acquiring preceding vehicle information concerning a preceding vehicle located on the course ahead;
estimating a position of one eye of a viewer riding in the self-vehicle;
estimating a view image of the viewer viewing the course ahead of the self-vehicle based on the forward information and the position of the one eye;
generating the display object extending from a first view image position to a second view image position and including depth information, the first view image position being a position in the view image corresponding to a first position on the self-vehicle side of a position of the preceding vehicle, the second view image position being a position in the view image corresponding to a second position where the self-vehicle is estimated to change the course, the second position being located on opposite side of the position of the preceding vehicle from the first position;
generating a light beam including a picture including the display object; and
projecting the light beam toward the one eye of the viewer based on the position of the one eye.

11. A vehicle comprising:
the vehicle mounted display system according to claim 1; and
a windshield configured to cause the light beam emitted from the vehicle mounted display system to be reflected toward the viewer.
